(19) Europäisches Patentamt

European Patent Office

Office européen des brevets

(11) Veröffentlichungsnummer: **0 000 525**
**A1**

(12) # EUROPÄISCHE PATENTANMELDUNG

(21) Anmeldenummer: 78100406.4

(22) Anmeldetag: 17.07.78

(51) Int. Cl.²: **F 16 B 7/04**

(30) Priorität: 21.07.77 DE 2732910

(43) Veröffentlichungstag der Anmeldung:
07.02.79 Bulletin 79/3

(84) Benannte Vertragsstaaten:
BE FR GB NL SE

(71) Anmelder: **Martens, Karin**
**Halenseestrasse 11**
**D-5090 Leverkusen. (DE)**

(72) Erfinder: **Martens, Karin**
**Halenseestrasse 11**
**D-5090 Leverkusen. (DE)**

(74) Vertreter: **Stenger, Alex, Dipl.-Ing. et al**
**Malkastenstrasse 2**
**D-4000 Düsseldorf 1. (DE)**

(54) Verbindungselement.

㊿ Bei einem Verbindungselement zum Verbinden eines mit einer hinterschnittenen Nut (12) versehenen Trägers (10) mit einem quer dazu angeordneten Hohlbalken (11) ist in dem Hohlbalken eine Schieberplatte (31) mit einem vorstehenden Hakenkopf (32) angeordnet, der mittels eines Exzenters (41) in den Hohlbalken (11) hineingezogen werden kann, wobei die Schieberplatte (31) an Schrägflächen (22, 37), die an ihr selbst und an einer Basisplatte (21) angeordnet sind, quer zur Längsachse der Nut (12) im Träger (10) verschoben wird. Dadurch hintergreift der Hakenkopf (32) die Wandung (13,14) an der Nut (12) und zieht gleichzeitig den Hohlbalken (11) gegen die Außenwand (17, 18) des Trägers (10). Eine zwischen dem Hohlbalken (11) und der Schieberplatte (31) angeordnete Schraubenfeder sorgt dafür, daß der Hakenkopf (32) nach dem Lösen des Exzenters (41) wieder in seine Ausgangslage zurückgedrückt wird, um ihn aus der Nut (12) herausziehen zu können.

## Fig.8

Croydon Printing Company Ltd.

- 1 -

# V e r b i n d u n g s e l e m e n t

Die Erfindung betrifft ein Verbindungselement zum Verbinden eines mit einer längsverlaufenden hinterschnittenen Nut ausgebildeten Trägers mit einem quer dazu angeordneten Hohlbalken, wobei das Verbindungselement teilweise in den Hohlbalken eingeschoben ist und einen Hakenkopf aufweist, dessen Kopfdicke kleiner ist als der Eingang der Nut.

Bekannt ist ein Verbindungselement der vorbeschriebenen Art, bei dem der Haken, an dem einen Ende eines drehbar gelagerten doppelarmigen Hebels angeordnet ist und das andere Ende des Hebels ein Stellmittel in Gestalt einer Gewindeschraube aufweist (DE-PS 1 775 802). Weiterhin hat das bekannte Verbindungselement oberhalb und unterhalb des Hakenkopfes von diesem ausgehende Zapfen. Mit dem Anziehen der Schraube werden der Hakenkopf und die oberhalb und unterhalb dieses angeordneten Zapfen an die beiden gegenüberliegenden Wände des verengten Einganges der Nut angepreßt. Diese Anpressung an den gegenüberliegenden Wänden der Nut führt zu einer starken Überbeanspruchung und vielfach zu dauerhaften Beschädigungen, insbesondere, sofern die zu verbindenden Traggestelle in üblicher Weise aus Aluminium bestehen. Das Verschwenken des doppelarmigen, an dem einen Ende mit

- 2 -

Hakenkopf versehenen Hebels um eine ortsfeste Drehachse durch die am anderen Ende des doppelarmigen Hebels eingreifende Gewindeschraube erfordert eine Vielzahl an Umdrehungen der Schraube, so daß das Drehen des doppelarmigen Hebels, die zur vorerwähnten Anpressung zu einem relativen Auseinanderspreizen zwischen Hakenkopf und den diesem zugeordneten Zapfen führt, umständlich ist. Auch ergibt sich der Nachteil, daß die Gewindebohrung in dem einen Ende des doppelarmigen Hebels und das Gewinde der Schraube bei vielfachem Gebrauch, wie das zum Beispiel zum Aufbauen von Messeständen üblich ist, bald verschleißen.

Die Erfindung, wie sie in den Ansprüchen gekennzeichnet ist, löst die Aufgabe, ein Verbindungselement zu schaffen, welches eine schädliche Anpressung der Befestigungselemente an den beiden gegenüberliegenden Wänden des verengten Einganges der Nut vermeidet und ein trotz vielfachen Gebrauchs verschleißfreies Stellmittel hat.

Nach der erfindungsgemäßen Lösung wird durch die Längsverschiebung der Schieberplatte im Verbindungselement eine Anpressung an den beiden gegenüberliegenden Wänden des verengten Einganges der Nut vermieden, weil beim Anziehen des Hakenkopfes durch Längsverschiebung dieser an der Innenwand der Nut angreift. Da zugleich die Stirnwände des Verbindungselementes an der Außenwand des Trägers anliegen, ergibt sich somit beim Anziehen des Hakenkopfes in Richtung nach innen in das vom Hohlbalken gebildete Gehäuse eine schraubstockartige Einpressung der Wandung zwischen Hakenkopf und Hohlbalken. Da die Bauteile des Verbindungselementes aus Stahl bestehen und großflächig ausgebildet sind, ergibt sich somit eine sehr feste Einspannung. Durch die Ausbildung des

- 3 -

Spannelementes als Exzenter genügt, um die volle Kraft auszuüben, eine halbe Umdrehung des Exzenters, so daß die Verbindung schnell durchzuführen ist. Da die Kraft des Exzenters über glatte Flächen ausgeübt wird, ergibt sich praktisch kein Verschleiß.

Die Erfindung wird nachfolgend anhand eines in der Zeichnung dargestellten Ausführungsbeispieles näher erläutert. Es zeigen:

Fig. 1     einen Träger mit einem daran über ein Verbindungselement angeschlossenen Hohlbalken mit lockerer Schieberplatte im Längsschnitt;

Fig. 2     eine Basisplatte mit Seitenwänden und Oberwand im Längsschnitt;

Fig. 3     dieselbe Basisplatte nach Figur 2 in Draufsicht;

Fig. 4     dieselbe Schieberplatte in Draufsicht;

Fig. 5     dieselbe Schieberplatte nach Figur 4 entlang der Linie V-V in Figur 4 im Längsschnitt;

Fig. 6     einen Bolzen mit Exzenter in Seitenansicht;

Fig. 7     denselben Bolzen nach Figur 6 in Ansicht von unten;

Fig. 8     den Träger mit daran über das Verbindungselement befestigtem Hohlbalken mit angezogener Schieberplatte im Längsschnitt.

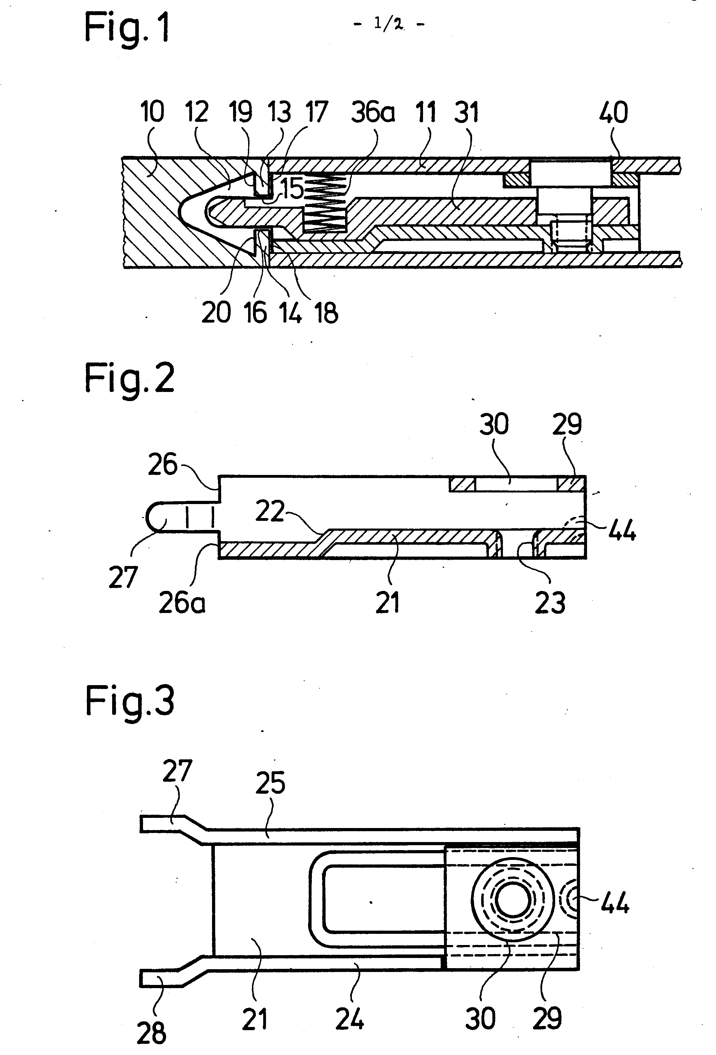

Nach Figur 1 ist ein Träger 10 in Gestalt einer Säule mit einem rechtwinklig abstehenden, horizontal verlaufenden Hohlbalken 11 verbunden. Der Träger 10 hat eine hinterschnittene Nut 12 mit den beiden Wandungen 13 und 14, die einander gegenüberliegende Stirnwände 15 und 16 im Nuteingang haben. Vorhanden sind weiterhin Außenwände 17 und 18 und Innenwände 19 und 20. Die Stirnflächen des Hohlträgers 11 liegen an den Außenwänden 17 und 18 an.

Die Figuren 2 und 3 zeigen eine Basisplatte 21, die an ihrer Oberseite eine Schrägfläche 22 hat und eine Gewindebohrung 23. Sie hat Seitenwände 24 und 25 mit jeweils zugeordneten Stirnflächen 26 und 26a und darüber vorstehende, nach außen abgewinkelte Zungen 27 und 28, die eine Breite haben, die dem Abstand der gegenüberliegenden Stirnwände 15 und 16 im Eingang der Nut 12 im Träger 10 entspricht. Von den Seitenwänden 24 und 25 geht eine Deckplatte 29 aus, die eine kreisrunde Öffnung 30 hat.

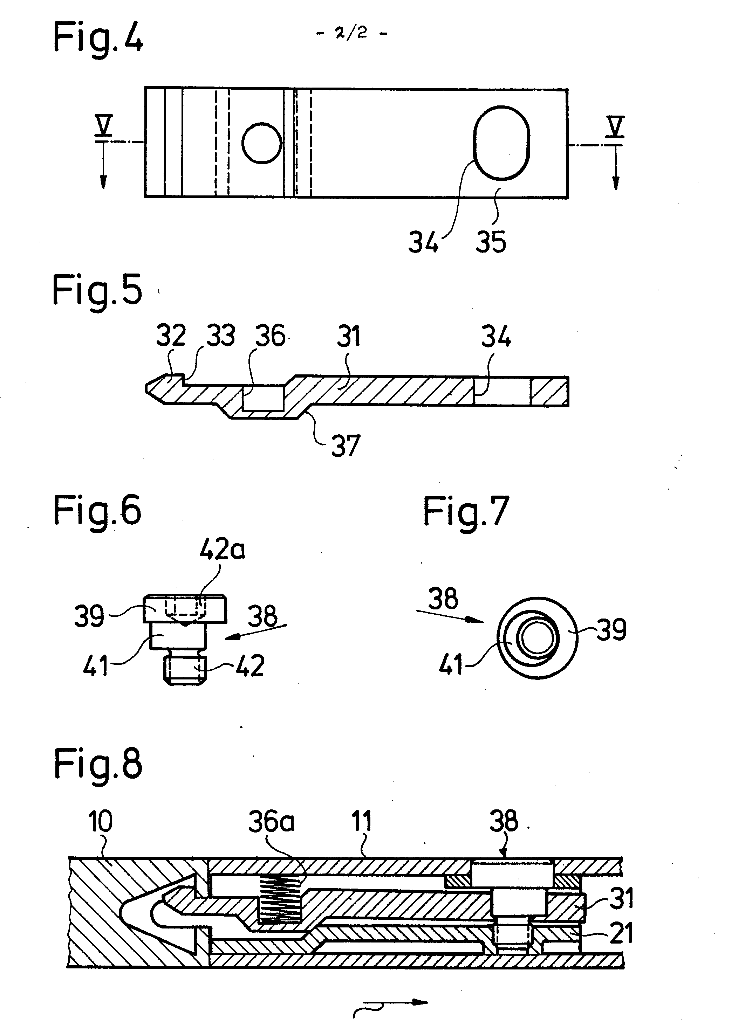

Die Figuren 4 und 5 zeigen eine Schieberplatte 31, die an ihrem vorderen Ende einen Hakenkopf 32 aufweist, dessen Dicke geringfügig kleiner ist als der Abstand der gegenüberliegenden Stirnwände 15 und 16 im Nuteingang des Trägers 10, damit dieser Hakenkopf von vorne in die Nut 12 eingeschoben werden kann. Um das Einschieben zu erleichtern, ist der Hakenkopf 32 vorne angespitzt. Er hat weiterhin eine rückseitige Klemmfläche 33. Die Schieberplatte 31 hat an dem anderen Ende eine ovalförmige Öffnung 34, deren Längsachse 35 sich quer zur Längserstreckung der Schieberplatte 31 erstreckt. Weiterhin ist eine Sacklochbohrung 36 vorhanden, in die eine aus den Figuren 1 und 8 ersichtliche Schraubenfeder 36a eingreift, die sich an der Innenwandung des Trägers 11 abstützt.

An der Unterseite der Schieberplatte 31 ist eine Schrägfläche 37 vorhanden, die zur Schrägfläche 22 der Basisplatte 21 parallel verläuft.

Die Figuren 6 und 7 zeigen einen Bolzen 38, der einen Kopf 39 hat, der durch eine Bohrung 40 des Hohlträgers 11 eingreift und zunächst durch diese Bohrung 40 zentriert ist. Weiterhin ist er zentriert in der Bohrung 30 der oberen Deckplatte 29 der Basisplatte 21. Der Bolzen 38 hat einen Exzenter 41, der insbesondere aus Figur 7 hervorgeht. Zugleich hat er an seinem vorderen freien Ende ein Gewinde 42, das in die Gewindebohrung 23 der Basisplatte 21 eingreift.

Nachdem die einzelnen Elemente beschrieben worden sind, sei nunmehr auf die Wirkungsweise eingegangen. Figur 1 zeigt die entspannte Lagerung der Schieberplatte 31 bei nicht angezogenem Exzenter 41 mit der Maßgabe, daß die Schraubenfeder 36 die Schieberplatte 31 an die Basisplatte 21 herandrückt, damit der Hakenkopf 32 in einer Ebene mit den Zungen 27 und 28 liegt und somit der Hakenkopf 32 und die Zungen 27, 28 von vorne in die hinterschnittene Nut 12 eingeführt werden können. Nachdem die Einführung in den Träger 10 erfolgt ist, wird über einen Imbus-Schlüssel, der in die Ausnehmung 42a im Kopf des Exzenters 41 eingesetzt wird, dieser bis zu einem Winkel bis zu 180° gedreht mit dem Ergebnis, daß die Schieber-platte 31 in angegebener Pfeilrichtung 43 nach Figur 8 verschoben und so über die Schrägflächen 22 und 37 soweit angehoben wird, daß die Klemmfläche 33 des Hakenkopfes 32 in die Höhe der Innenwand 19 der hinterschnittenen Nut 12 angehoben wird. Mit dem weiteren Verschie-

- 6 -

ben der Schieberplatte 31 in Pfeilrichtung 43 erfolgt dann eine Anpressung der Klemmfläche 33 des Hakenkopfes 32 an der Innenwand 19 der hinterschnittenen Nut 12 bei gleichzeitiger Gegenpressung der Stirnflächen 26 und 26a der Seitenwände 24 und 25 der Basisplatte 21 an die Außenwände 17 und 18 des Trägers 10. Dadurch werden die Wandungen 13 und 14 des Nuteinganges zwischen der Klemmfläche 33 des Hakenkopfes 32 und den Stirnflächen 26 und 26a der Basisplatte 21 nach Art eines Schraubstockes eingespannt, so daß eine äußerst feste Verbindung erreicht wird. Der Kopf 39 des Bolzens 38 ist zugleich in der Bohrung 40 des Hohlträgers 11 gehalten, zusätzlich zu der Halterung in der Deckplatte 29 der Basisplatte 21.

Das schraubstockartige Festklemmen der Wandungen 13 und 14 über den schnell zu handhabenden Exzenter 41 bei gleichzeitiger Möglichkeit, den Hakenkopf 32 stirnseitig in die Nut 12 einzuführen, bringt viele Vorteile. Die Zungen 27 und 28 dienen lediglich der Zentrierung. Sie üben auf die gegenüberliegenden Stirnwände 16 und 17 des Einganges der Nut 12 keine Anpreßkräfte aus.

Die Verbindung kann durch Rückdrehen des Exzenters 41 am Bolzen 38 leicht gelöst werden. Dann wird die Schieberplatte 31 in entgegengesetzter Richtung bewegt. Sie nimmt dann wieder die in Figur 1 dargestellte Stellung ein.

Zur Erleichterung des Aufgleitens der Schieberplatte 31 auf die Basisplatte 21 kann an deren rückwärtigem Ende ein Buckel 44 angeformt sein, wie es in Figur 2 gestrichelt dargestellt ist. Der Buckel 44 bewirkt, daß die Schieberplatte 31 von Anfang an leicht geneigt zur Basisplatte 21 angeordnet ist.

## Bezugszeichenliste:

| 10 | Träger | 28 | Zunge |
|----|--------|----|-------|
| 11 | Hohlbalken | 29 | Deckplatte |
| 12 | Nut | 30 | Öffnung |
| 13 | Wandung | 31 | Schieberplatte |
| 14 | Wandung | 32 | Hakenkopf |
| 15 | Stirnwand | 33 | Klemmfläche |
| 16 | Stirnwand | 34 | Öffnung |
| 17 | Außenwand | 35 | Längsachse |
| 18 | Außenwand | 36 | Sacklochbohrung |
| 19 | Innenwand | 36a | Schraubenfeder |
| 20 | Innenwand | 37 | Schrägfläche |
| 21 | Basisplatte | 38 | Bolzen |
| 22 | Schrägfläche | 39 | Kopf |
| 23 | Gewindebohrung | 40 | Bohrung |
| 24 | Seitenwand | 41 | Exzenter |
| 25 | Seitenwand | 42 | Gewinde |
| 26 | Stirnfläche | 42a | Ausnehmung |
| 26a | Stirnfläche | 43 | Pfeilrichtung |
| 27 | Zunge | 44 | Buckel |

St/ro

- 1 -

A n s p r ü c h e

1. Verbindungselement zum Verbinden eines mit einer längsverlaufenden Nut hinterschnittenen Trägers mit einem quer dazu angeordneten Hohlbalken, wobei das Verbindungselement teilweise in den Hohlbalken eingeschoben ist und einen Hakenkopf aufweist, dessen Kopfdicke kleiner ist als der Eingang der Nut, d a d u r c h   g e k e n n z e i c h n e t , daß der Hakenkopf (32) am vorderen Ende einer Schieberplatte (31) angeordnet ist, die durch einen Exzenter (41) in Längsrichtung einer Basisplatte (21) verschiebbar und über Schrägflächen (22, 37) anhebbar und absenkbar ist.

2. Verbindungselement nach Anspruch 1,   d a d u r c h   g e k e n n z e i c h n e t ,   daß die Schieberplatte (31) an ihrem dem Hakenkopf (32) gegenüberliegenden Ende mit einer ovalförmigen Öffnung (34) versehen ist, deren Längsachse (35) sich quer zur Längsrichtung der Schieberplatte (31) erstreckt und die Unterkante der Schieberplatte (31) mit einer Schrägfläche (37) versehen ist, die sich an einer Schrägfläche (22) der Basisplatte (21) abstützt.

3. Verbindungselement nach den Ansprüchen 1 und 2, d a d u r c h   g e k e n n z e i c h n e t , daß in die ovalförmige Öffnung (34) der Schieberplatte (31) der exzentrische glatte Schaft eines Bolzens (38) eingreift, dessen Kopf (39) durch eine Öffnung (40) im Hohlbalken (11) durch ein Werkzeug zugänglich ist und das untere Ende des Bolzens in eine Öffnung (23) der Basisplatte (21) eingreift.

4. Verbindungselement nach den Ansprüchen 1 bis 3, d a d u r c h  g e k e n n z e i c h n e t , daß der Bolzen (38) einen Kopf (39) für einen Schlüssel aufweist und an seinem vorderen Ende mit einem Gewinde (42) versehen ist, das in eine Gewindebohrung (23) der Basisplatte (21) eingreift.

5. Verbindungselement nach den Ansprüchen 1 und 2, d a d u r c h  g e k e n n z e i c h n e t , daß an der Basisplatte zwei Seitenwände (24, 25) vorhanden sind, von denen eine Deckplatte (29) ausgeht, die mit einer kreisrunden Öffnung (30) zur Aufnahme und Zentrierung des Kopfes (39) des Bolzens (38) versehen ist.

6. Verbindungselement nach den Ansprüchen 1 bis 5, d a d u r c h  g e k e n n z e i c h n e t , daß die Schieberplatte (31) durch eine Schraubenfeder (36) in Richtung zur Basisplatte (21) gedrückt ist.

7. Verbindungselement nach den Ansprüchen 1 bis 6, d a d u r c h  g e k e n n z e i c h n e t , daß am rückwärtigen Ende der Basisplatte (21) ein Buckel (44) vorgesehen ist.

Fig.1

- 1/2 -

0000525

Fig.2

Fig.3

0000525

- 2/2 -

**Fig.4**

34　35

**Fig.5**

32　33　36　31　34

37

**Fig.6**

42a

39　38

41　42

**Fig.7**

38

39

41

**Fig.8**

10　36a　11　38

31

21

43

| Europäisches Patentamt | EUROPÄISCHER RECHERCHENBERICHT 0000525 | Nummer der Anmeldung EP 78 10 0406 |
|---|---|---|

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | FR - A - 2 152 941 ( SWOBODA )<br>* Spalte 2, Zeilen 29-38; Spalte 3, Zeilen 1-37; Figuren 1 bis 3 *<br>--- | 1,2,3,4, 6 |
| | FR - A - 2 209 416 (STEINER)<br>* Spalte 2, Zeilen 32-39 *<br>--- | 1 |
| | FR - A - 2 095 063 (SERGENT)<br>* Spalte 1, Zeilen 29-37; Spalte 2 *<br>-- | 1,5,6 |
| A | FR - A - 2 073 641 (SCHADEBO) | |
| A | FR - A - 2 298 721 (STAEGER)<br>---- | |

**KLASSIFIKATION DER ANMELDUNG (Int Cl.3)**

F 16 B 7/04

**RECHERCHIERTE SACHGEBIETE (Int. Cl.3)**

F 16 B 7/04
F 16 B 7/22
F 16 B 12/32
F 16 B 12/40
F 16 B 12/42
A 47 B 57/54
A 47 B 57/06
A 47 B 96/08
A 47 B 96/14
E 04 B 2/76
F 16 B 5/06

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführte Dokument
L: aus andern Gründen angeführtes Dokument
&: Mitglied der gleichen Patentfamilie, übereinstimmende Dokument

Der vorliegende Recherchenbericht wurde für alle Patentansprüche erstellt.

| Recherchenort | Abschlußdatum der Recherche | Prüfer |
|---|---|---|
| Den Haag | 30 08 1978 | |